# EUROPÄISCHE PATENTSCHRIFT

(11) **EP 3 936 424 B1**
(45) Veröffentlichungstag und Bekanntmachung des Hinweises auf die Patenterteilung: **28.06.2023**
(21) Anmeldenummer: 21175036.9
(22) Anmeldetag: 20.05.2021
(51) Int. Cl.: B62M 6/55, B62M 11/14, B62K 19/30

(54) **ELEKTRISCHER HILFSANTRIEB FÜR EIN FAHRRAD**
AUXILIARY ELECTRIC DRIVE FOR A BICYCLE
ENTRAINEMENT AUXILIAIRE ÉLECTRIQUE POUR UNE BICYCLETTE

(30) Priorität: 07.07.2020 DE 102020117942
(43) Veröffentlichungstag der Anmeldung: 12.01.2022
(73) Patentinhaber: Framo Morat GmbH & Co. KG, 79871 Eisenbach (DE)
(72) Erfinder: Kappeler, Walter, 79822 Titisee-Neustadt (DE); Kuster, Holger, 79199 Kirchzarten (DE)
(74) Vertreter: Geitz Truckenmüller Lucht Christ

(56) Entgegenhaltungen:
- EP-A1- 2 722 210
- CH-A5- 593 822
- CN-A- 110 282 067
- DE-A1-102019 108 145
- DE-U1-202019 103 283
- US-A1- 2018 281 897

## Beschreibung

Die Erfindung geht aus von einem elektrischen Hilfsantrieb für ein Fahrrad.

Fahrräder, welche mit einem elektrischen Hilfsantrieb ausgestattet sind, werden allgemein als E-Bikes bezeichnet. Sie weisen als Antrieb eine im Rahmen drehbar aufgenommene Tretkurbelwelle mit Tretkurbeln und einen Elektromotor auf. Das Fahrrad kann alternativ oder kumulativ durch Treten der Tretkurbeln und/ oder durch den Elektromotor angetrieben werden. Ein derartiger elektrischer Hilfsantrieb ist beispielsweise aus der EP 2 785 582 B1 und aus der EP 2 376 324 B1 bekannt. Dabei sind ein Elektromotor und ein zugehöriges Getriebe um die Tretkurbelwelle derart angeordnet, dass die geometrische Antriebsachse des Elektromotors und die geometrische Drehachse der Tretkurbelwelle koaxial oder zumindest parallel verlaufen. Derartige bekannte Hilfsantriebe weisen die Nachteile auf, dass der Elektromotor zusammen mit dem zugehörigen Getriebe und einer zugehörigen Batterie ein hohes Systemgewicht aufweist, dass ein hohes Schleppmoment des Antriebsstrangs im nicht unterstützten Fahrbetrieb gegeben ist, weshalb das Fahrrad bei entleerter Batterie nur mit Mühe durch die Tretkurbeln alleine angetrieben werden kann und dass das Fahrrad aufgrund des Volumens des Antriebssystems von außen ohne weiteres als E-Bike erkennbar ist.

Gerade bei sportlich ambitionierten Fahrradfahrern besteht ein Bedarf nach einem Hilfsantrieb für Fahrräder, der das Mitfahren in einer Trainingsgruppe auch dann ermöglicht, wenn die Mitfahrer temporär oder länger anhaltend einen besseren Trainingszustand oder eine bessere Kondition aufweisen oder der einzelne Fahrer sich aufgrund einer Verletzung vorübergehend schonen muss und trotzdem nicht auf das sportliche Radfahren verzichten möchte. Dabei soll der Hilfsantrieb möglichst unauffällig sein, so dass er von außen nicht sofort erkennbar ist, wenn er an einem Fahrrad verbaut ist.

Das Dokument DE102019108145A1 offenbart die Merkmale der Präambel von Anspruch 1.

Der Erfindung liegt die Aufgabe zugrunde, einen Hilfsantrieb für ein Fahrrad zur Verfügung zu stellen, der ein möglichst kleines Baumaß aufweist, der möglichst leicht ist.

Diese Aufgabe wird durch einen Hilfsantrieb mit den Merkmalen des Anspruchs 1 gelöst. Der Hilfsantrieb weist ein Antriebsgehäuse auf, welches in das Sitzrohr oder das Unterrohr eines herkömmlichen Fahrradrahmens passt. In dem Antriebsgehäuse sind ein Elektromotor und ein Planetengetriebe angeordnet. Der Elektromotor treibt eine Motorwelle um eine geometrische Antriebs-Drehachse zur Rotation an. Die geometrische Antriebs-Drehachse ist dabei eine Gerade. Das Planetengetriebe ist antriebsseitig mit der Motorwelle wirkverbunden. Abtriebsseitig ist das Planetengetriebe derartig mit einer Tretkurbelwelle eines Fahrrads wirkverbindbar, dass sich die geometrische Antriebs-Drehachse des Elektromotors und die geometrische Drehachse der Tretkurbelwelle im wesentlichen rechtwinklig schneiden. Alternativ dazu schneidet eine zur geometrischen Antriebs-Drehachse parallele Gerade die geometrische Drehachse der Tretkurbelwelle. Die geometrische Drehachse der Tretkurbelwelle ist dabei ebenfalls eine Gerade. Das Planetengetriebe weist ein erstes zentrales Zahnrad, ein zweites zentrales Zahnrad und einem Steg auf. An dem Steg ist mindestens ein Planetenrad drehbar aufgenommen. Erstes und zweites zentrales Zahnrad und Steg sind alle zentrisch um die geometrische Antriebs-Drehachse angeordnet. Dabei ist das Planetenrad gestuft und weist einen ersten Verzahnungsbereich zp1 sowie einen zweiten Verzahnungsbereich zp2 auf. Der erste Verzahnungsbereich und der zweite Verzahnungsbereich unterscheiden sich. Dies kann beispielsweise ein Unterschied hinsichtlich der Anzahl der Zähne, hinsichtlich des Moduls, hinsichtlich des Schrägungswinkels hinsichtlich der Schrägungsrichtung, hinsichtlich des Eingriffswinkels oder der Profilverschiebung sein. Das Planetenrad kämmt mit dem ersten Verzahnungsbereich in dem ersten zentralen Zahnrad und mit dem zweiten Verzahnungsbereich in dem zweiten zentralen Zahnrad.

Der Elektromotor und das Planetengetriebe sind mit ihren geometrischen Achsen koaxial in dem Antriebsgehäuse verbaut. Der Elektromotor, das Planetengetriebe und das Antriebsgehäuse, das den Elektromotor und das Planetengetriebe aufnimmt, sind dabei so dimensioniert, dass sie in das Sitzrohr oder das Unterrohr eines herkömmlichen Fahrradrahmens passen. Das Sitzrohr wird auch als Sattelrohr bezeichnet. Dabei ist der Elektromotor bevorzugt so in dem Sitzrohr oder Unterrohr angeordnet, dass die geometrische Antriebs-Drehachse des Elektromotors koaxial oder parallel zu der Längsachse des Sitzrohrs oder des Unterrohrs verläuft. Aufgrund der kleinen Baugröße kann der Hilfsantrieb damit in Fahrradrahmen aufgenommen werden, die wie herkömmliche Fahrradrahmen aussehen. Der in dem Fahrradrahmen angeordnete Hilfsantrieb ist von außen nicht sichtbar.

Bei einem herkömmlichen Fahrradrahmen münden das Sitzrohr und das Unterrohr mit ihren nach unten gerichteten Enden in ein Tretlagergehäuse, in welchem die Tretkurbelwelle aufgenommen ist. Dabei verläuft die geometrische Drehachse der Tretkurbelwelle im Wesentlichen senkrecht zu den Längsachsen des Sitzrohrs und des Unterrohrs. Die geometrische Drehachse der Tretkurbelwelle schneidet dabei die Längsachse des Sitzrohrs und des Unterrohrs oder eine zur Längsachse des Sitzrohrs parallele Gerade und eine zur Längsachse des Unterrohrs parallele Gerade im rechten Winkel. Die geometrische Antriebs-Drehachse des im Fahrradrahmen angeordneten Hilfsantriebs verläuft koaxial oder parallel zur Längsachse des Sitzrohrs oder zur Längsachse des Unterrohrs. Entsprechend schneidet die geometrische Antriebs-Drehachse des im Fahrradrahmen angeordneten Hilfsantriebs die geometrische Drehachse der Tretkurbelwelle oder eine zur Drehachse der Tretkurbelwelle parallele Gerade im Wesentlichen rechtwinklig.

Die Übertragung des Drehmoments des Hilfsantriebs auf die Tretkurbelwelle erfolgt über ein Winkelgetriebe, beispielsweise über ein Kegelradgetriebe, ein Schneckengetriebe, ein Schraubradgetriebe oder ein Kronenradgetriebe. Hierzu kann die Tretkurbelwelle mit einem Ring oder Rad mit einer entsprechenden Verzahnung, beispielsweise einem Tellerrad, Schneckenrad, Schraubrad oder Kronenrad, ausgestattet sein, während das Planetengetriebe abtriebsseitig mit einem entsprechenden Kegelrad, einer Schneckenverzahnung oder Stirnradverzahnung zur Leistungsübertragung ausgestattet ist.

Bei dem Planetengetriebe handelt es sich damit um ein sogenanntes Stufenplanetengetriebe. Im Gegensatz zu einem konventionellen Planetengetriebe (PLG) lassen sich in quasi einer Stufe Übersetzungen realisieren, für die man bei einem konventionellen Planetengetriebe zwei oder mehr Stufen benötigen würde. Die Anzahl an Zahneingriffen und die Anzahl rotierender Teile muss hierzu nicht erhöht werden. Im Vergleich zu einem konventionellen mehrstufigen Planetengetriebe typischer Bauform weist das Stufenplanetengetriebe deutlich weniger Zahneingriffe auf. Beispielsweise weist das Planetengetriebe mit drei gestuften Planetenrädern nur sechs Zahneingriffe auf, während ein konventionelles zweistufiges Planetengetriebe mit drei Planetenrädern je Stufe insgesamt zwölf Zahneingriffe aufweist. Bei vergleichsweise hoher Übersetzung weist der erfindungsgemäße Hilfsantrieb somit eine geringe Anzahl an Zahneingriffen und Lagerstellen auf. Dies führt dazu, dass bei dem erfindungsgemäßen Hilfsantrieb Vibrationen reduziert sind und der Hilfsantrieb daher geräuscharm ist. Ferner weist der Hilfsantrieb einen höheren Wirkungsgrad auf.

Ferner sind trotz der kurzen und kleinen Bauform des Hilfsantriebs Übersetzungen von i ≥ 10 möglich. Selbst bei vergleichsweise hoher Übersetzung ist im Vergleich zu einem konventionellen zweistufigen Planetengetriebe nur eine geringe Anzahl an Bauteilen notwendig. Dies führt zu einem geringen Gewicht, geringen Kosten bei der Herstellung des Hilfsantriebs und zu einer kurzen Bauform.

Darüber hinaus sind die Planetenräder weniger stark belastet als bei konventionellen mehrstufigen Planetengetrieben, da im Vergleich zu einem typischen Planetengetriebe jede der Verzahnungen zp1 und zp2 mit nur einem Gegenrad kämmt. Somit tritt keine Biege-Wechselbelastung der Planetenradzähne, wie dies bei einem konventionellen Planetengetriebe der Fall wäre, auf.

Nach einer vorteilhaften Ausgestaltung der Erfindung unterscheiden sich der erste Verzahnungsbereich und der zweite Verzahnungsbereich in der Anzahl der Zähne.

Nach einer weiteren vorteilhaften Ausgestaltung der Erfindung unterscheiden sich der erste Verzahnungsbereich und der zweite Verzahnungsbereich hinsichtlich des Moduls. Der Modul eines Zahnrades wird auch als Durchmesserteilung bezeichnet. Er ist ein Maß für die Größe der Zähne von Zahnrädern und entspricht dem Quotient aus Teilkreisdurchmesser d und Zähnezahl z: m = d/z. Die Bestimmungsgrößen der Zähne, wie zum Beispiel Kopf- und Fußhöhe, Fußrundungsradius und Kopfkantenbruch können relativ zum Modul angegeben werden.

Nach einer weiteren vorteilhaften Ausgestaltung der Erfindung weist der erste Verzahnungsbereich einen anderen Schrägungswinkel oder eine andere Schrägungsrichtung auf als der zweite Verzahnungsbereich.

Nach einer weiteren vorteilhaften Ausgestaltung der Erfindung weist die Verzahnung des ersten Verzahnungsbereichs einen anderen Eingriffswinkel auf als die Verzahnung des zweiten Verzahnungsbereichs.

Nach einer weiteren vorteilhaften Ausgestaltung der Erfindung weist das erste zentrale Zahnrad eine Außenverzahnung auf. So ist das erste zentrale Zahnrad beispielsweise als Sonnenrad ausgebildet.

Nach einer weiteren vorteilhaften Ausgestaltung der Erfindung ist die Motorwelle mit einer Außenverzahnung ausgestattet. Der die Außenverzahnung aufweisenden Abschnitt der Motorwelle bildet das erste zentrale Zahnrad.

Nach einer weiteren vorteilhaften Ausgestaltung der Erfindung weist das zweite zentrale Zahnrad eine Innenverzahnung auf. Es ist damit als Hohlrad ausgebildet.

Nach einer weiteren vorteilhaften Ausgestaltung der Erfindung ist das mit einer Innenverzahnung ausgestattete zweite zentrale Zahnrad verdrehfest mit dem Antriebsgehäuse verbunden. Der Steg ist als Abtrieb des Planetengetriebes ausgebildet. Das erste zentrale Zahnrad weist eine Außenverzahnung auf. Der Eintrieb des Motors in das Planetengetriebe erfolgt über das erste Zahnrad, das als Sonnenrad ausgebildet ist. Das erste Zahnrad kämmt mit der Verzahnung zp1 des Planetenrades. Diese kann in einer vorteilhaften Ausgestaltung in Kunststoff ausgeführt sein, was sich vorteilhaft auf das Gewicht und die Dämpfung auswirkt. Die Verzahnung zp2 des Planetenrades kämmt mit der Verzahnung z2 des als Hohlrad ausgebildeten zweiten zentralen Zahnrades. Dieses ist verdrehfest mit dem Antriebsgehäuse verbunden. Der Steg S, auf dem das mindestens eine Planetenrad drehbar gelagert ist, dient als Abtrieb des Getriebes.

Nach einer weiteren vorteilhaften Ausgestaltung der Erfindung ist das mit einer Innenverzahnung ausgestattete zweite zentrale Zahnrad als Abtrieb des Planetengetriebes ausgebildet und der Steg verdrehfest mit dem Antriebsgehäuse verbunden. Dies stellt eine alternative Ausführungsform zu der oben beschriebenen Ausführungsform dar.

Nach einer weiteren vorteilhaften Ausgestaltung der Erfindung weist das zweite zentrale Zahnrad eine Außenverzahnung auf. Wenn sowohl das erste als auch das zweite Zahnrad eine Außenverzahnung aufweisen, kann es aus technischer Sicht sinnvoll sein, den Antrieb über den Steg des Planetengetriebes zu realisieren. Der Steg wird in diesem Fall an die Motorwelle gekoppelt. Der Abtrieb erfolgt über das erste zentrale Zahnrad, während das zweite zentrale Zahnrad drehfest mit dem Antriebsgehäuse verbunden ist. Alternativ dazu kann das erste zentrale Zahnrad drehfest mit den Antriebsgehäuse verbunden sein und der Abtrieb über das zweite zentrale Zahnrad erfolgen.

Nach einer weiteren vorteilhaften Ausgestaltung der Erfindung weist das erste zentrale Zahnrad eine Innenverzahnung auf. Wenn sowohl das erste als auch das zweite Zahnrad eine Innenverzahnung aufweisen, kann es aus technischer Sicht sinnvoll sein, den Antrieb über den Steg des Planetengetriebes zu realisieren. Der Steg wird in diesem Fall an die Motorwelle gekoppelt. Der Abtrieb erfolgt über das erste zentrale Zahnrad, während das zweite zentrale Zahnrad drehfest mit dem Antriebsgehäuse verbunden ist. Alternativ dazu kann das erste zentrale Zahnrad drehfest mit den Antriebsgehäuse verbunden sein und der Abtrieb über das zweite zentrale Zahnrad erfolgen.

Nach einer weiteren vorteilhaften Ausgestaltung der Erfindung ist das Planetengetriebe mit einer Anzahl n an Planetenrädern ausgestattet ist, die mit einem Winkelabstand von jeweils 360°/n an dem Steg drehbar aufgenommen sind. So können beispielsweise drei Planetenräder mit einem Winkelabstand von 120° an dem Steg angeordnet sein. Alternativ kann die Anzahl der Planetenräder beispielsweise auch zwei oder vier betragen. Der Winkelabstand ändert sich dann entsprechend.

Nach einer weiteren vorteilhaften Ausgestaltung der Erfindung ist das Planetenrad mittels eines als Lagerbolzen dienenden Planetenradbolzens zweiseitig an dem Steg drehbar aufgenommen.

Nach einer weiteren vorteilhaften Ausgestaltung der Erfindung ist das Planetenrad an seinen Stirnseiten mit Achsstummeln ausgestattet, die an dem Steg drehbar aufgenommen sind.

Nach einer weiteren vorteilhaften Ausgestaltung der Erfindung ist das Planetenrad einstückig ausgebildet. Das bedeutet, dass der erste Verzahnungsbereich und der zweite Verzahnungsbereich des Planetenrades aus einem Stück bestehen. Ist das Planetenrad mit Achsstummels an den Stirnseiten ausgestattet, so können diese zusammen mit dem ersten und zweiten Verzahnungsbereich aus einem Stück bestehen.

Nach einer weiteren vorteilhaften Ausgestaltung der Erfindung besteht zumindest einer der beiden Verzahnungsbereiche des Planetenrads aus Kunststoff. Es können auch beide Verzahnungsbereiche aus Kunststoff bestehen. Das Planetenrad kann beispielsweise als Kunststoff-Spritzgussteil hergestellt werden. Besteht das Planetenrad aus Kunststoff, so wirkt sich dies vorteilhaft auf das Gewicht und die Dämpfung des Planetengetriebes aus. Die beiden Verzahnungsstufen des Planetenrades können auch aus unterschiedlichen Materialien bestehen.

Nach einer weiteren vorteilhaften Ausgestaltung der Erfindung besteht der erste Verzahnungsbereich des Planetenrads aus Kunststoff und der zweite Verzahnungsbereich des Planetenrads aus Metall. So kann beispielsweise der erste Verzahnungsbereich einen größeren Durchmesser als der zweite Verzahnungsbereich aufweisen. Aufgrund des größeren Durchmessers sind die Zahnkräfte am ersten Verzahnungsbereich kleiner als am zweiten Verzahnungsbereich. In diesem Fall kann der erste Verzahnungsbereich aus Kunststoff und der zweite Verzahnungsbereich aus Metall bestehen.

Nach einer weiteren vorteilhaften Ausgestaltung der Erfindung weist das Planetenrad eine Nabe auf. Der zweite Verzahnungsbereich ist einstückig mit der Nabe ausgebildet. Der erste Verzahnungsbereich ist auf die Nabe oder auf den zweiten Verzahnungsbereich aufgespritzt oder auf die Nabe gefügt.

Nach einer weiteren vorteilhaften Ausgestaltung der Erfindung besteht der Steg aus Aluminium oder einer Aluminiumlegierung.

Nach einer weiteren vorteilhaften Ausgestaltung der Erfindung besteht der Steg aus Magnesium oder einer Magnesiumlegierung.

Nach einer weiteren vorteilhaften Ausgestaltung der Erfindung ist das Planetengetriebe abtriebsseitig mit einem Kegelrad zur Leistungsübertragung auf eine Tretkurbelwelle ausgestattet. Die Tretkurbelwelle wird mit einem entsprechenden Rad oder Ring ausgestattet, das mit dem Kegelrad des Planetengetriebes einen Kegelradsatz bildet. Ein Kegelradgetriebe ist ein Winkelgetriebe. Es gestattet, dass die geometrische Antriebsachse des Hilfsantriebs und die geometrische Drehachse der Tretkurbelwelle oder einen parallele Gerade senkrecht aufeinander stehen.

Nach einer weiteren vorteilhaften Ausgestaltung der Erfindung ist das Planetengetriebe abtriebsseitig mit einer Schneckenverzahnung zur Leistungsübertragung auf eine Tretkurbelwelle ausgestattet.

Nach einer weiteren vorteilhaften Ausgestaltung der Erfindung ist das Planetengetriebe abtriebsseitig mit einer Stirnradverzahnung zur Leistungsübertragung auf eine Tretkurbelwelle ausgestattet.

Nach einer weiteren vorteilhaften Ausgestaltung der Erfindung ist der Hilfsantrieb mit einem Freilauf ausgestattet. Hierzu kann ein auf der Tretkurbelwelle sitzender Ring oder ein auf der Tretkurbelwelle sitzendes Rad, welche abtriebsseitig mit dem Planetengetriebe in Wirkeingriff stehen, über den Freilauf mit der Tretkurbelwelle verbunden sein. Der Freilauf sorgt dafür, dass der Hilfsantrieb beim nicht unterstützen Treten vollständig von der Tretkurbelwelle getrennt ist.

Auf diese Weise kann der Hilfsantrieb bei Nichtgebrauch vollständig von der Tretkurbel entkoppelt werden, wenn er nicht benötigt wird.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel des erfindungsgemäßen Hilfsantriebs dargestellt. Es zeigen:
- Figur 1: Fahrradrahmen in Seitenansicht,
- Figur 2: Ausschnitt aus dem Fahrradrahmen gemäß Figur 1 mit einem ersten Ausführungsbeispiel eines Hilfsantriebs,
- Figur 3: Hilfsantrieb gemäß Figur 2 in Seitenansicht.
- Figur 4: Längsschnitt durch die Hilfsantrieb gemäß Figur 3 entlang der in Figur 3 mit A - A gekennzeichneten Ebene,
- Figur 5: Planetenrad des Hilfsantriebs gemäß Figur 3 und 4,
- Figur 6: zweites Ausführungsbeispiel eines Planetenrades für einen Hilfsantrieb gemäß Figur 3,
- Figur 7: schematische Darstellung eines typischen Planetengetriebes nach dem Stand der Technik,
- Figur 8: schematische Darstellung eines Planetengetriebes gemäß erstem Ausführungsbeispiel in Figur 2 bis 5,
- Figur 9: schematische Darstellung eines Planetengetriebes für ein zweites Ausführungsbeispiel eines Hilfsantriebs,
- Figur 10: schematische Darstellung eines Planetengetriebes für ein drittes Ausführungsbeispiels eines Hilfsantriebs.

### Beschreibung der Ausführungsbeispiele

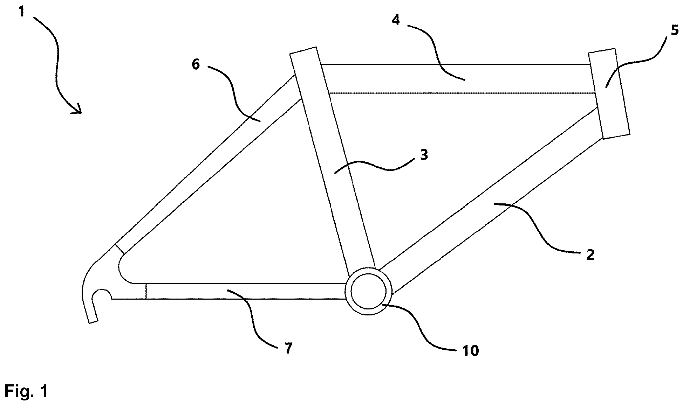

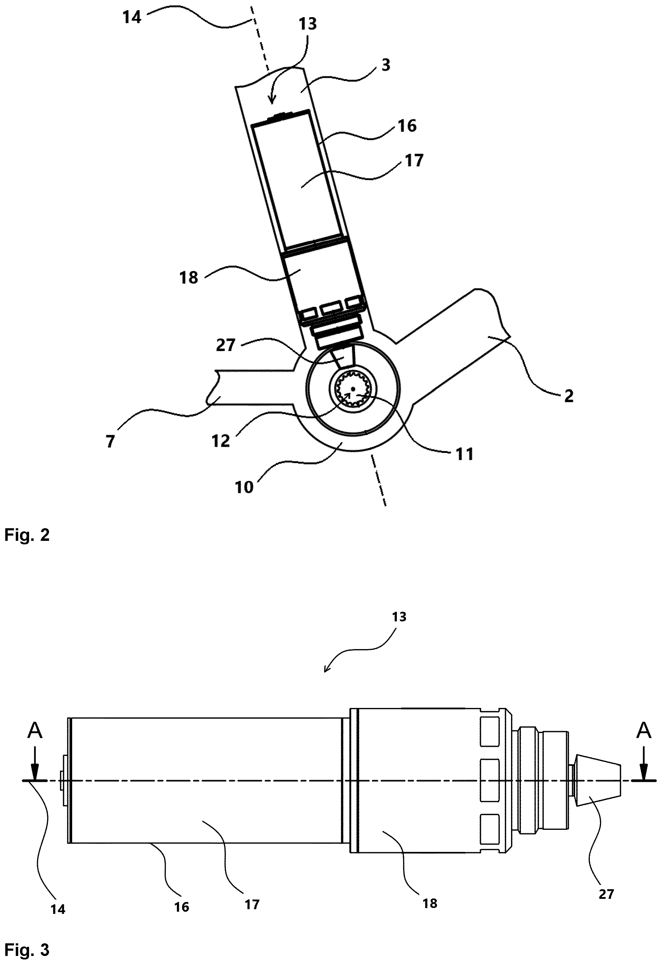

In Figur 1 ist ein typischer Fahrradrahmen 1 in Seitenansicht dargestellt, der sich zu Ausstattung mit einem Hilfsantrieb gemäß Figuren 2 bis 5 und 8 bis 10 eignet. Der Fahrradrahmen 1 weist ein Unterrohr 2, ein Sitzrohr 3, ein Oberrohr 4, ein Steuerrohr 5, eine Sitzstrebe 6 und eine Kettenstrebe 7 auf. In dem Steuerrohr 5 wird eine in der Zeichnung nicht dargestellte Gabel aufgenommen. Das Unterrohr 2 und das Sitzrohr 3 münden an ihrer Unterseite beide in ein Tretlagergehäuse 10.

Figur 2 zeigt einen Ausschnitt aus dem Fahrradrahmen gemäß Figur 1. Der Ausschnitt umfasst Abschnitte des Unterrohrs 2, des Sitzrohrs 3, der Kettenstrebe 7 und das Tretlagergehäuse 10. In dem Tretlagergehäuse 10 ist eine Tretkurbelwelle 11 derart aufgenommen, dass sie über Pedale, welche in der Zeichnung nicht dargestellt sind, zur Rotation um eine geometrische Drehachse 12 der Tretkurbelwelle 11 angetrieben werden kann. Die geometrische Drehachse 12 der Tretkurbelwelle verläuft senkrecht zu Zeichenebene in Figur 2, weshalb sie in Figur 2 nur als Punkt dargestellt ist. Der Punkt symbolisiert den Schnittpunkt zwischen der geometrischen Drehachse 12 und der Zeichenebene. In dem Unterrohr 2 ist ein Hilfsantrieb 13 angeordnet. Dieser ist mit einem Antriebsgehäuse 16 ausgestattet, in welchem ein Motor 17 und ein Planetengetriebe 18 angeordnet sind. Der Motor 17 erzeugt ein Drehmoment um eine geometrische Antriebs-Drehachse 14. Der Hilfsantrieb 13 ist derart in dem Unterrohr 2 angeordnet, dass die geometrische Antriebs-Drehachse 14 des Hilfsantriebs 13 die geometrische Drehachse 12 der Tretkurbelwelle 11 rechtwinklig schneidet. Der Hilfsantrieb 13 und die Tretkurbelwelle 11 sind über ein Winkelgetriebe miteinander verbunden. Dieses Winkelgetriebe ist im Ausführungsbeispiel als Kegelradgetriebe ausgebildet. Der Hilfsantrieb 13 ist abtriebsseitig mit einem Kegelrad 27 ausgestattet. Die Tretkurbelwelle 11 ist mit einem korrespondieren Kegelrad ausgestattet, in welchem das Kegelrad 27 kämmt.

In Figur 3 ist der Hilfsantrieb 13 in einer Seitenansicht dargestellt.

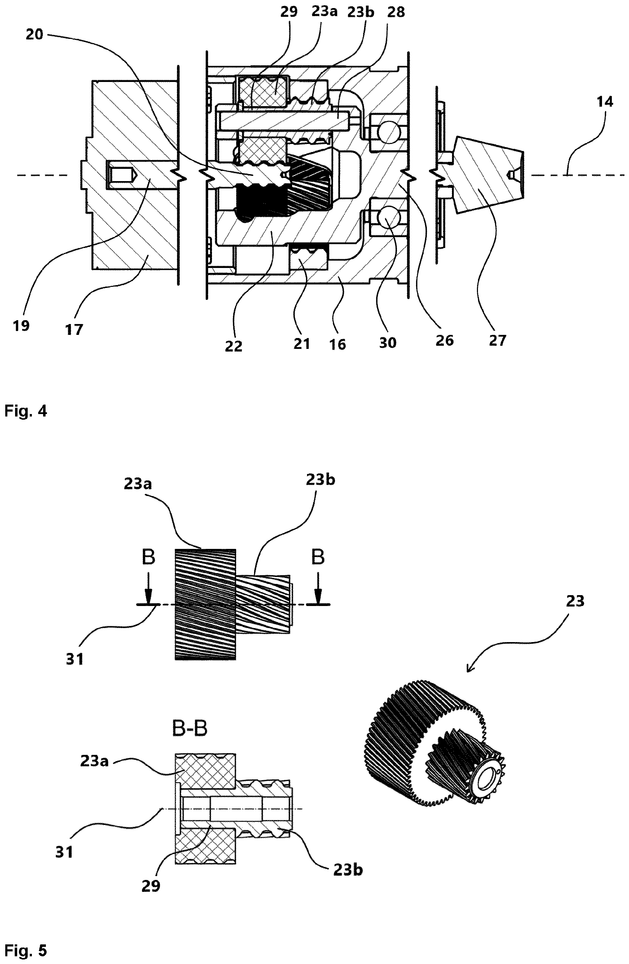

Figur 4 zeigt einen Längsschnitt durch den Hilfsantrieb gemäß Figur 3. Der Hilfsantrieb weist ein Antriebsgehäuse 16 auf, in welchem ein Motor 17 und ein Planetengetriebe 18 angeordnet sind. Bei dem Motor 17 handelt es sich um einen Elektromotor. Eine Motorwelle 19 wird durch den Motor 17 um die geometrische Antriebsdrehachse 14 zur Rotation angetrieben. Die Motorwelle 19 ist an ihrem aus dem Motor herausragenden Ende mit einer Außenverzahnung ausgestattet. Dieser mit einer Außenverzahnung ausgestattete Abschnitt der Motorwelle 19 bildet ein erstes zentralen Zahnrad 20 des Planetengetriebes 18. Das Planetengetriebe weist neben dem ersten zentralen Zahnrad 20 ein zweites zentrales Zahnrad 21 und einen Steg 22 mit drei Planetenrädern auf. Von diesen drei Planetenrädern ist nur das Planetenrad 23 im Längsschnitt in Figur 4 dargestellt. Ein weiteres Planetenrad befindet sich von der Zeichenebene und das andere dahinter. Das zweite zentrale Zahnrad 21 ist mit einer Innenverzahnung ausgestattet. Die Planetenräder 23 sind zweistufig ausgebildet. Das Planetenrad 23 weist einen ersten Verzahnungsbereich 23a auf, der mit einer Verzahnung zp1 ausgestattet ist, und einen zweiten Verzahnungsbereich 23b, der mit einer Verzahnung zp2 ausgestattet ist. Der erste Verzahnungsbereich 23a und der zweite Verzahnungsbereich 23b unterscheiden sich im vorliegenden Ausführungsbeispiel im Durchmesser, in der Anzahl der Zähne und im Modul. Der erste Verzahnungsbereich 23a steht mit dem ersten zentralen Zahnrad 20 in Eingriff. Der zweite Verzahnungsbereich 23b steht mit dem zweiten zentralen Zahnrad 21 in Eingriff. Das zweite zentrale Zahnrad 21 ist drehfest mit dem Antriebsgehäuse 16 verbunden. Der Steg 22 dient als Abtrieb des Planetengetriebes. Er ist über eine Getriebewelle 26 mit dem Kegelrad 27 verbunden, welches Teil des Winkelgetriebes ist.

Das Planetenrad 23 weist einen Lagerbolzen 28 auf, mit dem das Planetenrad an zwei Seiten an dem als Planetenradträger ausgebildeten Steg 22 drehbar gelagert ist. Auf dem Lagerbolzen 28 ist der zweite Verzahnungsbereich 23b drehfest angeordnet. An dem zweiten Verzahnungsbereich 23b ist in axialer Richtung eine Hülse 29 ausgebildet, welche gleichzeitig eine Nabe des Planetenrades 23 bildet. Auf der Hülse 29 ist der erste Verzahnungsbereich 23a angeordnet. Der zweite Verzahnungsbereich 23b und die Hülse 29 sind aus einem Stück gefertigt. Sie bestehen aus Metall. Der erste Verzahnungsbereich 23a besteht aus Kunststoff.

Der Steg 22 und die Getriebewelle 26 sind über Lager 30 im Antriebsgehäuse 16 drehbar gelagert.

Die beiden anderen Planetenräder des Planetengetriebes sind identisch aufgebaut wie das Planetenrad 23 und stehen entsprechend in Wirkeingriff mit dem ersten zentralen Zahnrad 20 und dem zweiten zentralen Zahnrad 21.

Figur 5 zeigt das Planetenrad 23 in verschiedenen Ansichten. Das Planetenrad ist an dem Steg um eine geometrische Planetenrad-Achse drehbar angeordnet. Der Lagerbozen 28 ist in Figur 5 nicht dargestellt. Figur 5 zeigt, dass sich der erste Verzahnungsbereich 23a und der zweite Verzahnungsbereich 23b im Modul, im Durchmesser, in der Anzahl der Zähne und in dem Schrägungswinkel unterscheiden.

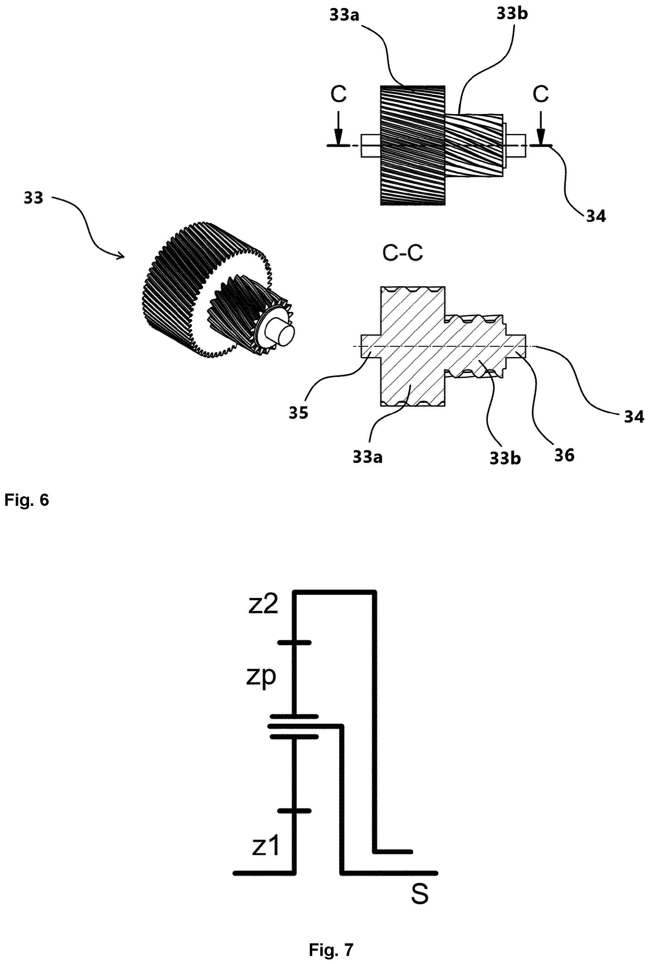

Figur 6 zeigt ein weiteres Ausführungsbeispiel eines Planetenrades 33 für den Hilfsantrieb 13 gemäß Figuren 2, 3 und 4. Das Planetenrad 33 unterscheidet sich von dem Planetenrad 23 dadurch, dass es aus einem Stück Kunststoff oder Metall besteht. Diese eine Stück umfasst einen ersten Verzahnungsbereich 33a, einen zweiten Verzahnungsbereich 33b, einen ersten Achsstummel 35 und einen zweiten Achsstummel 36. Das Planetenrad 33 wird um eine geometrische Planetenrad-Achse 34 drehbar an einem Steg aufgenommen, der in Figur 6 nicht dargestellt ist. Es kann sich hierbei um einen Steg gemäß Figur 4 handeln.

Die Figuren 7 bis 10 zeigen unterschiedliche Arten von Planetengetrieben.

In Figur 7 ist ein typisches aus dem Stand der Technik bekanntes Planetengetriebe dargestellt. Es weist ein erstes zentrales Zahnrad z1 mit Außenverzahnung, ein zweites zentrales Zahnrad z2 mit Innenverzahnung, einen Steg S und ein an dem Steg angeordnetes Planetenrad zp auf, dessen Verzahnung über die gesamte Radbreite gleich ist. Das bedeutet, dass das Modul, die Anzahl der Zähne, der Durchmesser, der Schrägungswinkel und die Schrägungsrichtung für das gesamte Planetenrad gleich ist.

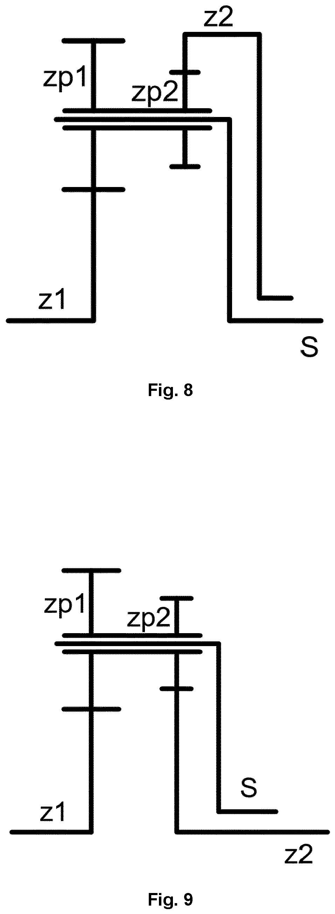

In Figur 8 ist das Planetengetriebe des Hilfsantriebs gemäß den Figuren 2 bis 5 schematisch dargestellt. Entsprechend zu dem Planetengetriebe in Figur 7 sind ein erstes zentrales Zahnrad z1 mit Außenverzahnung, ein zweites zentrales Zahnrad z2 mit Innenverzahnung, ein Steg S und ein Planetenrad vorgesehen. Im Unterschied zu dem in Figur 6 dargestellten Planetengetriebe weist das Planetenrad jedoch zwei Verzahnungsbereiche zp1 und zp2 auf. Diese unterscheiden sich hinsichtlich des Moduls, der Anzahl der Zähne, des Durchmessers, des Schrägungswinkels und/ oder der Schrägungsrichtung. Der erste Verzahnungsbereich zp1 steht mit dem ersten zentralen Zahnrad z1 in Wirkeingriff. Der zweite Verzahnungsbereich zp2 steht mit dem zweiten zentralen Zahnrad z2 in Wirkeingriff.

In Figur 9 ist ein weiteres Planetengetriebe schematisch dargestellt, das in ein zweites Ausführungsbeispiel eines Hilfsantriebs eingebaut sein kann. Es unterscheidet sich von dem in Figur 8 dargestellten Planetengetriebe dadurch, dass sowohl das erste zentrale Zahnrad z1 als auch das zweite zentrale Zahnrad z2 eine Außenverzahnung aufweisen. Das Planetenrad ist ebenfalls zweistufig und mit einem ersten Verzahnungsbereich zp1 sowie einem zweiten Verzahnungsbereich zp2 ausgestattet. Wenn der Steg antriebsseitig an die Motorwelle gekoppelt ist und der Abtrieb über das erste oder zweite zentrale Zahnrad erfolgt, wobei das jeweils andere zentrale Zahnrad drehfest mit dem Antriebsgehäuse verbunden ist, dann lassen sich mit einem derartigen Planetengetriebe noch höhere Übersetzungen erzielen als mit dem Planetengetriebe in Figur 8. Allerdings sind die übertragbaren Momente aufgrund der geringeren Hebelverhältnisse bei vergleichbarem Bauraum geringer.

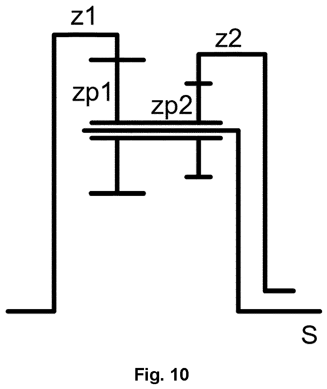

In Figur 10 ist ein weiteres Planetengetriebe schematisch dargestellt, das in ein drittes Ausführungsbeispiel eines Hilfsantriebs eingebaut sein kann. Es unterscheidet sich von den in den Figuren 8 und 9 dargestellten Planetengetrieben dadurch, dass sowohl das erste zentrale Zahnrad z1 als auch das zweite zentrale Zahnrad z2 eine Innenverzahnung aufweisen. Das Planetenrad ist ebenfalls zweistufig und mit einem ersten Verzahnungsbereich zp1 sowie einem zweiten Verzahnungsbereich zp2 ausgestattet. Mit einem derartigen Planetengetriebe lassen sich noch größere Übersetzungen erzielen als mit den Planetengetrieben in den Figuren 8 und 9. Darüber hinaus lassen sich aufgrund der größeren Hebelverhältnisse bei gleichem Bauraum auch größere Momente als bei dem Planetengetriebe gemäß Figur 9 übertragen.

### Bezugszahlen

- 1: Fahrradrahmen
- 2: Unterrohr
- 3: Sitzrohr
- 4: Oberrohr
- 5: Steuerrohr
- 6: Sitzstrebe
- 7: Kettenstrebe
- 8:
- 9:
- 10: Tretlagergehäuse
- 11: Tretkurbelwelle
- 12: geometrische Drehachse der Tretkurbelwelle
- 13: Hilfsantrieb
- 14: geometrische Antriebs-Drehachse des Hilfsantriebs
- 15:
- 16: Antriebsgehäuse
- 17: Motor
- 18: Planetengetriebe
- 19: Motorwelle
- 20: erstes zentrales Zahnrad
- 21: zweites zentrales Zahnrad
- 22: Steg
- 23: Planetenrad
- 23a: erster Verzahnungsbereich
- 23b: zweiter Verzahnungsbereich
- 24:
- 25:
- 26: Getriebewelle
- 27: Kegelrad
- 28: Lagerbolzen
- 29: Hülse
- 30: Lager
- 31: geometrische Planetenrad-Achse
- 32:
- 33: Planetenrad
- 33a: erster Verzahnungsbereich
- 33b: zweiter Verzahnungsbereich
- 34: geometrische Planetenrad-Achse
- 35: Achsstummel
- 36: Achsstummel

## Patentansprüche

1. Elektrischer Hilfsantrieb für ein Fahrrad
mit einem Antriebsgehäuse (16), welches in ein Sitzrohr oder ein Unterrohr eines herkömmlichen Fahrradrahmens passt,
mit einem in dem Antriebsgehäuse (16) angeordneten Elektromotor (17), welcher eine Motorwelle (19) um eine geometrische Antriebs-Drehachse (14) zur Rotation antreibt,
mit einem in dem Antriebsgehäuse (16) aufgenommenen Planetengetriebe (18), welches antriebsseitig mit der Motorwelle (19) wirkverbunden ist und abtriebsseitig derartig mit einer Tretkurbelwelle (11) eines Fahrrads wirkverbindbar ist, dass sich die Antriebs-Drehachse (14) und die geometrische Drehachse (12) der Tretkurbelwelle (11) oder eine zur geometrischen Drehachse der Tretkurbelwelle (11) parallele Gerade im Wesentlichen rechtwinklig schneiden,
wobei das Planetengetriebe (18) mit einem ersten zentralen Zahnrad (20), einem zweiten zentralen Zahnrad (21) und einem Steg (22) ausgestattet ist, welche alle zentrisch um die Antriebs-Drehachse (14) angeordneten sind, und wobei an dem Steg (22) mindestens ein Planetenrad (23, 33) um eine geometrische Planetenachse (31, 34) drehbar aufgenommen ist,
**dadurch gekennzeichnet, dass**
das Planetenrad (23, 33) gestuft ist und einen ersten Verzahnungsbereich zp1 (23a, 33a) sowie einen zweiten Verzahnungsbereich zp2 (23b, 33b) aufweist und sich der erste Verzahnungsbereich (23a, 33a) und der zweite Verzahnungsbereich (23b, 33b) unterscheiden,
wobei das Planetenrad (23, 33) mit dem ersten Verzahnungsbereich (23a, 33a) in dem ersten zentralen Zahnrad (20) und mit dem zweiten Verzahnungsbereich (23b, 33b) in dem zweiten zentralen Zahnrad (21) kämmt.

2. Elektrischer Hilfsantrieb nach Anspruch 1, **dadurch gekennzeichnet, dass** sich der erste Verzahnungsbereich (23a, 33a) und der zweite Verzahnungsbereich (23b, 33b) in der Anzahl der Zähne unterscheiden.

3. Elektrischer Hilfsantrieb nach Anspruch 1 oder 2, **dadurch gekennzeichnet, dass** sich der erste Verzahnungsbereich (23a, 33a) und der zweite Verzahnungsbereich (23b, 33b) hinsichtlich des Moduls unterscheiden.

4. Elektrischer Hilfsantrieb nach einem der vorhergehenden Ansprüche, **dadurch gekennzeichnet, dass** der erste Verzahnungsbereich (23a, 33a) einen anderen Schrägungswinkel und/ oder eine andere Schrägungsrichtung aufweist als der zweite Verzahnungsbereich (23b, 33b).

5. Elektrischer Hilfsantrieb nach einem der vorhergehenden Ansprüche, **dadurch gekennzeichnet, dass** die Verzahnung des ersten Verzahnungsbereichs (23a, 33a) einen anderen Eingriffswinkel aufweist als die Verzahnung des zweiten Verzahnungsbereichs (23b, 33b).

6. Elektrischer Hilfsantrieb nach einem der vorhergehenden Ansprüche, **dadurch gekennzeichnet, dass** das erste zentrale Zahnrad (20) eine Außenverzahnung aufweist.

7. Elektrischer Hilfsantrieb nach einem der vorhergehenden Ansprüche, **dadurch gekennzeichnet, dass** die Motorwelle (19) mit einer Außenverzahnung ausgestattet ist, welche das erste zentrale Zahnrad (20) bildet.

8. Elektrischer Hilfsantrieb nach einem der vorhergehenden Ansprüche, **dadurch gekennzeichnet, dass** das zweite zentrale Zahnrad (21) eine Innenverzahnung aufweist.

9. Elektrischer Hilfsantrieb nach Anspruch 8, **dadurch gekennzeichnet, dass** das mit einer Innenverzahnung ausgestattete zweite zentrale Zahnrad (21) verdrehfest mit dem Antriebsgehäuse (16) verbunden ist und dass der Steg (22) als Abtrieb des Planetengetriebes (18) ausgebildet ist.

10. Elektrischer Hilfsantrieb nach Anspruch 8, **dadurch gekennzeichnet, dass** das mit einer Innenverzahnung ausgestattete zweite zentrale Zahnrad (21) als Abtrieb des Planetengetriebes (18) ausgebildet ist und dass der der Steg (22) verdrehfest mit dem Antriebsgehäuse (16) verbunden ist.

11. Elektrischer Hilfsantrieb nach einem der Ansprüche 1 bis 7, **dadurch gekennzeichnet, dass** das zweite zentrale Zahnrad (21) eine Außenverzahnung aufweist.

12. Elektrischer Hilfsantrieb nach einem der vorhergehenden Ansprüche, **dadurch gekennzeichnet, dass** sowohl das erste zentrale Zahnrad (20) als auch das zweite zentrale Zahnrad (21) eine Außenverzahnung aufweisen, dass der Steg (22) des Planetengetriebes (18) antriebsseitig an die Motorwelle (19) gekoppelt ist, dass von dem ersten zentralen Zahnrad (20) und dem zweiten zentralen Zahnrad (21) jeweils eines als Abtrieb ausgebildet ist und das andere drehfest mit den Antriebsgehäuse (16) verbunden ist.

13. Elektrischer Hilfsantrieb nach einem der Ansprüche 1 bis 5, **dadurch gekennzeichnet, dass** das erste zentrale Zahnrad (20) eine Innenverzahnung aufweist.

14. Elektrischer Hilfsantrieb nach einem der vorhergehenden Ansprüche, **dadurch gekennzeichnet, dass** sowohl das erste zentrale Zahnrad (20) als auch das zweite zentrale Zahnrad (21) eine Innenverzahnung aufweisen, dass der Steg (22) des Planetengetriebes (18) antriebsseitig an die Motorwelle (19) gekoppelt ist, dass von dem ersten zentralen Zahnrad (20) und dem zweiten zentralen Zahnrad (21) jeweils eines als Abtrieb ausgebildet ist und das andere drehfest mit den Antriebsgehäuse (16) verbunden ist.

15. Elektrischer Hilfsantrieb nach einem der vorhergehenden Ansprüche, **dadurch gekennzeichnet, dass** das Planetengetriebe mit n Planetenrädern (23, 33) ausgestattet ist, die mit einem Winkelabstand von jeweils 360°/n an dem Steg (22) drehbar aufgenommen sind, wobei n die Anzahl der Planetenräder (23, 33) ist.

16. Elektrischer Hilfsantrieb nach einem der vorhergehenden Ansprüche, **dadurch gekennzeichnet, dass** das Planetenrad (23) mittels eines Planetenradbolzens (28) zweiseitig an dem Steg (22) drehbar aufgenommen ist.

17. Elektrischer Hilfsantrieb nach einem der Ansprüche 1 bis 15, **dadurch gekennzeichnet, dass** das Planetenrad (33) an seinen Stirnseiten mit Achsstummeln (35, 36) ausgestattet ist, die an dem Steg (22) drehbar aufgenommen sind.

18. Elektrischer Hilfsantrieb nach einem der vorhergehenden Ansprüche, **dadurch gekennzeichnet, dass** das Planetenrad (33) einstückig ausgebildet ist.

19. Elektrischer Hilfsantrieb nach einem der vorhergehenden Ansprüche, **dadurch gekennzeichnet, dass** zumindest einer der beiden Verzahnungsbereiche (23a, 23b, 33a, 33b) des Planetenrads (23, 33) aus Kunststoff besteht.

20. Elektrischer Hilfsantrieb nach Anspruch 19, **dadurch gekennzeichnet, dass** der erste Verzahnungsbereich (23a) des Planetenrads (23) aus Kunststoff und der zweite Verzahnungsbereich (23b) des Planetenrads (23) aus Metall besteht.

21. Elektrischer Hilfsantrieb nach einem der vorhergehenden Ansprüche, **dadurch gekennzeichnet, dass** das Planetenrad (23) eine Nabe (29) aufweist, dass der zweite Verzahnungsbereich (23b) einstückig mit der Nabe (29) ausgebildet ist, und dass der erste Verzahnungsbereich (23a) auf die Nabe (29) oder auf den zweiten Verzahnungsbereich (23b) aufgespritzt oder auf die Nabe (29) gefügt ist.

22. Elektrischer Hilfsantrieb nach einem der vorhergehenden Ansprüche, dass der Steg (22) aus Aluminium oder einer Aluminiumlegierung besteht.

23. Elektrischer Hilfsantrieb nach einem der Ansprüche 1 bis 21, **dadurch gekennzeichnet, dass** der Steg (22) aus Magnesium oder einer Magnesiumlegierung besteht.

24. Elektrischer Hilfsantrieb nach einem der vorhergehenden Ansprüche, **dadurch gekennzeichnet, dass** das Planetengetriebe (18) abtriebsseitig mit einem Kegelrad (27) zur Leistungsübertragung auf eine Tretkurbelwelle (11) ausgestattet ist.

25. Elektrischer Hilfsantrieb nach einem der Ansprüche 1 bis 18, **dadurch gekennzeichnet, dass** das Planetengetriebe (18) abtriebsseitig mit einer Schneckenverzahnung zur Leistungsübertragung auf eine Tretkurbelwelle (11) ausgestattet ist.

26. Elektrischer Hilfsantrieb nach einem der Ansprüche 1 bis 18, **dadurch gekennzeichnet, dass** das Planetengetriebe (18) abtriebsseitig mit einer Stirnradverzahnung zur Leistungsübertragung auf eine Tretkurbelwelle (11) ausgestattet ist.

27. Elektrischer Hilfsantrieb nach einem der vorhergehenden Ansprüche, **dadurch gekennzeichnet, dass** er mit einem Freilauf ausgestattet ist.

## Claims

1. Electric auxiliary drive for a bicycle
with a drive housing (16), which fits into a seat tube or a down tube of a conventional bicycle frame,
with an electric motor (17) which is accommodated in the drive housing (16) and drives a motor shaft (19) for rotation about a geometric drive rotational axis (14),
with a planetary gear (18) which is accommodated in the drive housing (16) and which is operatively connected to the motor shaft (19) on the drive side and can be operatively connected to a pedal crank shaft (11) of a bicycle on the output side in such a way that the drive axis of rotation (14) and the geometric axis of rotation (12) of the pedal crank shaft (11) or a straight line parallel to the geometric axis of rotation of the pedal crank shaft (11) intersect substantially at right angles,
wherein the planetary gear (18) is provided with a first central gear (20), a second central gear (21) and a planetary carrier (22), all of which are arranged centrally around the drive rotational axis (14), and wherein at least one planetary gear (23, 33) is received on the planetary carrier (22) so as to be rotatable around a geometric planetary axis (31, 34), **characterized in that** the planet gear (23, 33) is stepped and has a first toothed zone zp1 (23a, 33a) and a second toothed zone zp2 (23b, 33b), and the first toothed zone (23a, 33a) and the second toothed zone (23b, 33b) are different from one another,
wherein the planet gear (23, 33) meshes with the first toothed zone (23a, 33a) in the first central gear (20) and with the second toothed zone (23b, 33b) in the second central gear (21).

2. Electric auxiliary drive according to claim 1, **characterized in that** the first toothed zone (23a, 33a) and the second toothed zone (23b, 33b) differ in the number of teeth.

3. Electric auxiliary drive according to claim 1 or 2, **characterized in that** the first toothed zone (23a, 33a) and the second toothed zone (23b, 33b) differ with respect to the module.

4. Electric auxiliary drive according to one of the preceding claims, **characterized in that** the first toothing zone (23a, 33a) has a different helix angle and/or a different helix direction than the second toothing zone (23b, 33b).

5. Electric auxiliary drive according to one of the preceding claims, **characterized in that** the toothing of the first toothing zone (23a, 33a) has a different pressure angle than the toothing of the second toothing zone (23b, 33b).

6. Electric auxiliary drive according to one of the preceding claims, **characterized in that** the first central gear (20) has outer teeth.

7. Electric auxiliary drive according to any of the preceding claims, **characterized in that** the motor shaft (19) is provided with outer teeth forming the first central gear (20).

8. Electric auxiliary drive according to one of the preceding claims, **characterized in that** the second central gear (21) has inner teeth.

9. Electric auxiliary drive according to claim 8, **characterized in that** the second central gear (21), which is provided with inner teeth, is connected to the drive housing (16) in a rotationally fixed manner, and **in that** the planetary carrier (22) forms the output of the planetary gear (18).

10. Electric auxiliary drive according to claim 8, **characterized in that** the second central gear (21), which is provided with inner teeth, forms the output of the planetary gear (18), and the planetary carrier (22) is connected to the drive housing (16) in a rotationally fixed manner.

11. Electric auxiliary drive according to one of claims 1 to 7, **characterized in that** the second central gear (21) has outer teeth.

12. Electric auxiliary drive according to one of the preceding claims, **characterized in that** both the first central gear (20) and the second central gear (21) have outer teeth, that the planetary carrier (22) of the planetary gear (18) is coupled on the drive side to the motor shaft (19), that either the first central gear (20) or the second central gear (21) forms the output and the other is connected to the drive housing (16) in a rotationally fixed manner.

13. Electric auxiliary drive according to one of the claims 1 to 5, **characterized in that** the first central gear (20) has an inner toothing.

14. Electric auxiliary drive according to one of the preceding claims, **characterized in that** both the first central gear (20) and the second central gear (21) have inner toothing, that the planetary carrier (22) of the planetary gear (18) is coupled on the drive side to the motor shaft (19), that one of the first central gear (20) and the second central gear (21) forms the output and the other is connected in a rotationally fixed manner to the drive housing (16).

15. Electric auxiliary drive according to one of the preceding claims, **characterized in that** the planetary gear is provided with n planetary gears (23, 33) mounted on the planetary carrier (22) so as to be rotatable with an angular spacing of 360°/n in each case, n being the number of planetary gears (23, 33).

16. Electric auxiliary drive according to one of the preceding claims, **characterized in that** the planet gear (23) is rotatably mounted on the planetary carrier (22) on both sides by means of a planet gear pin (28).

17. Electric auxiliary drive according to one of claims 1 to 15, **characterized in that** the planetary gear (33) is provided on its end faces with axle stubs (35, 36) rotatably mounted on the planetary carrier (22).

18. Electric auxiliary drive according to one of the preceding claims, **characterized in that** the planet gear (33) is formed in one piece.

19. Electric auxiliary drive according to one of the preceding claims, **characterized in that** at least one of the two toothed zones (23a, 23b, 33a, 33b) of the planet gear (23, 33) is made of plastic.

20. Electric auxiliary drive according to claim 19, **characterized in that** the first toothed zone (23a) of the planet gear (23) is made of plastic and the second toothed zone (23b) of the planet gear (23) is made of metal.

21. Electric auxiliary drive according to one of the preceding claims, **characterized in that** the planet gear (23) has a hub (29), that the second toothed zone (23b) is formed integrally with the hub (29), and that the first toothed zone (23a) is injection-moulded onto the hub (29) or onto the second toothed zone (23b) or is jointed to the hub (29).

22. Electric auxiliary drive according to one of the preceding claims, **characterized in that** the planetary carrier (22) is made of aluminum or an aluminum alloy.

23. Electric auxiliary drive according to any one of claims 1 to 21, **characterized in that** the planetary carrier (22) is made of magnesium or a magnesium alloy.

24. Electric auxiliary drive according to one of the preceding claims, **characterized in that** the planetary gear (18) comprises on the output side a bevel gear (27) for transmitting power to a pedal crankshaft (11).

25. Electric auxiliary drive according to any one of claims 1 to 18, **characterized in that** the planetary gear (18) comprises on the output side a worm gear for transmitting power to a pedal crankshaft (11).

26. Electric auxiliary drive according to one of claims 1 to 18, **characterized in that** the planetary gear (18) comprises on the output side a spur gear for transmitting power to a pedal crankshaft (11).

27. Electric auxiliary drive according to one of the preceding claims, **characterized in that** it comprises a freewheel.

## Revendications

1. Entraînement auxiliaire électrique pour une bicyclette
comprenant un boîtier d'entraînement (16) tenant dans un tube de selle ou un tube oblique d'un cadre de bicyclette conventionnel,
comprenant un moteur électrique (17) disposé dans le boîtier d'entraînement (16), ledit moteur électrique entraînant un arbre moteur (19) dans un mouvement de rotation autour d'un axe de rotation d'entraînement géométrique (14),
comprenant un engrenage planétaire (18) logé dans le boîtier d'entraînement (16), ledit engrenage planétaire étant, côté entraînement, relié fonctionnellement à l'arbre moteur (19) et pouvant, côté sortie, être relié fonctionnellement à un arbre de pédalier (11) d'une bicyclette de manière que l'axe de rotation d'entraînement (14) et l'axe de rotation géométrique (12) de l'arbre de pédalier (11) ou une droite parallèle à l'axe de rotation géométrique de l'arbre de pédalier (11) se coupent essentiellement perpendiculairement,
ledit engrenage planétaire (18) étant doté d'un premier pignon central (20), d'un second pignon central (21) et d'un porte-satellites (22) tous disposés de façon centrée autour de l'axe de rotation d'entraînement (14), et au moins une pignon satellite (23, 33) est logé sur le porte-satellites (22) de manière à pouvoir tourner autour d'un axe planétaire géométrique (31, 34),
**caractérisé en ce que**
ledit pignon satellite (23, 33) étant étagé et présentant une première zone de denture zp1 (23a, 33a) ainsi qu'une seconde zone de denture zp2 (23b, 33b), ladite première zone de denture (23a, 33a) étant différente de ladite seconde zone de denture (23b, 33b),
ledit pignon satellite (23, 33) s'engrenant avec la première zone de denture (23a, 33a) dans le premier pignon central (20) et avec la seconde zone de denture (23b, 33b) dans le second pignon central (21).

2. Entraînement auxiliaire électrique selon la revendication 1, **caractérisé en ce que** la première zone de denture (23a, 33a) et la seconde zone de denture (23b, 33b) présentent un nombre différent de dents.

3. Entraînement auxiliaire électrique selon la revendication 1 ou 2, **caractérisé en ce que** la première zone de denture (23a, 33a) et la seconde zone de denture (23b, 33b) présentent des modules différents.

4. Entraînement auxiliaire électrique selon l'une quelconque des revendications précédentes, **caractérisé en ce que** la première zone de denture (23a, 33a) présente un angle d'hélice différent et/ou un sens d'hélice différent de ceux de la seconde zone de denture (23b, 33b).

5. Entraînement auxiliaire électrique selon l'une quelconque des revendications précédentes, **caractérisé en ce que** la denture de la première zone de denture (23a, 33a) présente un angle d'attaque différent de celui de la denture de la seconde zone de denture (23b, 33b).

6. Entraînement auxiliaire électrique selon l'une quelconque des revendications précédentes, **caractérisé en ce que** le premier pignon central (20) présente une denture extérieure.

7. Entraînement auxiliaire électrique selon l'une quelconque des revendications précédentes, **caractérisé en ce que** l'arbre moteur (19) est doté d'une denture extérieure qui constitue le premier pignon central (20).

8. Entraînement auxiliaire électrique selon l'une quelconque des revendications précédentes, **caractérisé en ce que** le second pignon central (21) présente une denture intérieure.

9. Entraînement auxiliaire électrique selon la revendication 8, **caractérisé en ce que** le second pignon central (21) doté d'une denture intérieure est relié au boîtier d'entraînement (16) de manière solidaire en rotation et que le porte-satellites (22) constitue la sortie de l'engrenage planétaire (18).

10. Entraînement auxiliaire électrique selon la revendication 8, **caractérisé en ce que** le second pignon central (21) doté d'une denture intérieure constitue la sortie de l'engrenage planétaire (18) et que le porte-satellites (22) est relié au boîtier d'entraînement (16) de manière solidaire en rotation.

11. Entraînement auxiliaire électrique selon l'une des revendications 1 à 7, **caractérisé en ce que** le second pignon central (21) présente une denture extérieure.

12. Entraînement auxiliaire électrique selon l'une quelconque des revendications précédentes, **caractérisé en ce que** le premier pignon central (20) comme le second pignon central (21) présentent une denture extérieure, que le porte-satellites (22) de l'engrenage planétaire (18) est couplé à l'arbre moteur (19) côté entraînement, que soit le premier pignon central (20), soit le second pignon central (21) constitue la sortie, l'autre pignon central étant relié au boîtier d'entraînement (16) de manière solidaire en rotation.

13. Entraînement auxiliaire électrique selon l'une des revendications 1 à 5, **caractérisé en ce que** le premier pignon central (20) présente une denture intérieure.

14. Entraînement auxiliaire électrique selon l'une quelconque des revendications précédentes, **caractérisé en ce que** le premier pignon central (20) comme le second pignon central (21) présentent une denture intérieure, que le porte-satellites (22) de l'engrenage planétaire (18) est couplé à l'arbre moteur (19) côté entraînement, que soit le premier pignon central (20), soit le second pignon central (21) constitue la sortie, l'autre pignon central étant relié au boîtier d'entraînement (16) de manière solidaire en rotation.

15. Entraînement auxiliaire électrique selon l'une quelconque des revendications précédentes, **caractérisé en ce que** l'engrenage planétaire est doté de n pignons satellites (23, 33) logés sur le porte-satellites (22) de manière à pouvoir tourner avec un espacement angulaire de respectivement 360°/n, n correspondant au nombre de pignons satellites (23, 33).

16. Entraînement auxiliaire électrique selon l'une quelconque des revendications précédentes, **caractérisé en ce que** le pignon satellite (23) est logé bilatéralement sur le porte-satellites (22) au moyen d'un pivot de satellite (28) de manière à pouvoir tourner.

17. Entraînement auxiliaire électrique selon l'une des revendications 1 à 15, **caractérisé en ce que** le pignon satellite (33) est doté, sur ses faces frontales, de tourillons (35, 36) logés sur le porte-satellites (22) de manière à pouvoir tourner.

18. Entraînement auxiliaire électrique selon l'une quelconque des revendications précédentes, **caractérisé en ce que** le pignon satellite (33) est constitué d'un seul tenant.

19. Entraînement auxiliaire électrique selon l'une quelconque des revendications précédentes, **caractérisé en ce qu'**au moins une des deux zones de denture (23a, 23b, 33a, 33b) du pignon satellite (23, 33) est en matière plastique.

20. Entraînement auxiliaire électrique selon la revendication 19, **caractérisé en ce que** la première zone de denture (23a) du pignon satellite (23) est en matière plastique et que la seconde zone de denture (23b) du pignon satellite (23) est en métal.

21. Entraînement auxiliaire électrique selon l'une quelconque des revendications précédentes, **caractérisé en ce que** le pignon planétaire (23) présente un moyeu (29), que la seconde zone de denture (23b) est faite d'un seul tenant avec le moyeu (29) et que la première zone de denture (23a) est injectée sur le moyeu (29) ou sur la deuxième zone de denture (23b) ou assemblée sur le moyeu (29).

22. Entraînement auxiliaire électrique selon l'une quelconque des revendications précédentes, **caractérisé en ce que** le porte-satellites (22) est en aluminium ou en alliage d'aluminium.

23. Entraînement auxiliaire électrique selon l'une des revendications 1 à 21, **caractérisé en ce que** le porte-satellites (22) est en magnésium ou en alliage de magnésium.

24. Entraînement auxiliaire électrique selon l'une quelconque des revendications précédentes, **caractérisé en ce que** l'entraînement planétaire (18) est doté, côté sortie, d'un pignon conique (27) pour transmettre la puissance à un arbre de pédalier (11).

25. Entraînement auxiliaire électrique selon l'une des revendications 1 à 18, **caractérisé en ce que** l'engrenage planétaire (18) est doté, côté sortie, d'une denture hélicoïdale pour transmettre la puissance à un arbre de pédalier (11).

26. Entraînement auxiliaire électrique selon l'une des revendications 1 à 18, **caractérisé en ce que** l'entraînement planétaire (18) est doté, côté sortie, d'une denture droite pour transmettre la puissance à un arbre de pédalier (11).

27. Entraînement auxiliaire électrique selon l'une quelconque des revendications précédentes, **caractérisé en ce que** ledit entraînement auxiliaire électrique est doté d'une roue libre.
